# EUROPEAN PATENT SPECIFICATION

(11) **EP 4 549 924 B1**
(45) Date of publication and mention of the grant of the patent: **15.04.2026**
(21) Application number: 24208915.9
(22) Date of filing: 25.10.2024
(51) Int. Cl.: G01N 27/447

(54) **ELECTROPHORESIS UNIT AND ELECTROPHORESIS METHOD WITH INSULATING FLUID**
ELEKTROPHORESEEINHEIT UND ELEKTROPHORESEVERFAHREN MIT EINER ISOLIERENDEN FLÜSSIGKEIT
UNITÉ D'ÉLECTROPHORÈSE ET PROCÉDÉ D'ÉLECTROPHORÈSE AVEC FLUIDE ISOLANT

(30) Priority: 30.10.2023 JP 2023185912
(43) Date of publication of application: 07.05.2025
(73) Proprietor: ARKRAY, Inc., Kyoto-shi, Kyoto 601-8045 (JP)
(72) Inventor: TAKANE, Eri, Kyoto, 602-0008 (JP); MIYAMOTO, Chiaki, Kyoto, 602-0008 (JP); HONDA, Yasumasa, Kyoto, 602-0008 (JP)
(74) Representative: Dehns

(56) References cited:
- US-A1- 2016 320 286
- MANZ A: "PLANAR CHIPS TECHNOLOGY FOR MINIATURIZATION OF SEPARATION SYSTEMS: A DEVELOPING PERSPECTIVE IN CHEMICAL MONITORING", ADVANCES IN CHROMATOGRAPHY, MARCEL DEKKER, INC., BASEL, XX, 1 January 1993 (1993-01-01), pages 1 - 66, XP001059875

## Description

### BACKGROUND

### Technical Field

The present invention relates to a method and a device for filling a capillary with a running solution and a sample solution when capillary electrophoresis is performed.

### Related Art

In a device for performing capillary electrophoresis, various techniques are disclosed regarding a method for filling a capillary with a running solution and a sample solution. For example, as in the technique described in Japanese Patent Application Laid-Open (JP-A) No. 2005-214710, a structure of a microchip in which reservoirs for storing liquid are provided at both ends of a separation flow path, and a separation buffer solution and a sample are supplied to the reservoirs at both ends, is common in capillary electrophoresis. In the technique described in JP-A No. 2005-214710, since the amount of liquid flowing through the separation flow path cannot exceed the volume of the reservoirs, it is necessary to repeat a process of supplying liquid to the reservoirs or aspirating liquid from the reservoirs for sufficient cleaning.

In the technique described in Japanese Patent Application Laid-Open (JP-A) No. 2017-161233, a dispensing probe and an aspirating nozzle are inserted into reservoirs at both ends of a flow path, and a liquid is continuously discharged and aspirated, so that the repetitive operation as in JP-A No. 2005-214710 is omitted.

The relevant prior art also includes US 2016/320286 A1 (MIKI HIROKO ET AL, 3 November 2016), which discloses an electrophoresis unit comprising a capillary flow path, a pair of electrodes, a detector and a first and second flow paths.

### SUMMARY

When flow paths through which a sample solution and a running solution flow are provided at an upstream side and a downstream side of a capillary without a reservoir structure, respectively, a liquid amount does not depend on the volume of the reservoirs. However, since electrodes are provided at both ends of the capillary, it is necessary to prevent electric leakage to a flow path.

The invention is defined in the appended claims. An electrophoresis unit according to one aspect of the invention includes: a capillary flow path through which a sample solution moves from an upstream side to a downstream side in a state in which the capillary flow path is filled with a running solution; a pair of electrodes installed near (optionally, *at*) both ends of the capillary flow path; a detector provided at an intermediate part of the capillary flow path; a first flow path, an intermediate part of which communicates with the upstream side of the capillary flow path, the first flow path extending in a direction intersecting a longitudinal direction of the capillary flow path; a second flow path, an intermediate part of which communicates with the downstream side of the capillary flow path, the second flow path extending in the direction intersecting the longitudinal direction of the capillary flow path; a first supply source configured to supply the sample solution to the first flow path; a second supply source configured to supply the running solution to the second flow path; a pump configured to move the running solution from the second supply source to the second flow path and to move the sample solution from the first supply source to the first flow path; a first auxiliary supply source configured to supply, to the first flow path, insulating fluid that insulates the sample solution in contact with the electrode in the first flow path; a second auxiliary supply source configured to supply, to the second flow path, insulating fluid that insulates the running solution in contact with the electrode in the second flow path; and a switch configured to switch between supply and stop of fluid at least from the first supply source and the second supply source to the first flow path and the second flow path.

The feature of "a pair of electrodes installed near (optionally, *at*) both ends of the capillary flow path" may mean that the electrophoresis unit comprises two electrodes, with a first electrode installed near (optionally, *at*) a first end (e.g. an upstream end) of the capillary flow path, and a second electrode installed near (optionally, *at*) a second end (e.g. a downstream end) of the capillary flow path. The feature that an electrode is "near (optionally, *at*)" an end of the capillary flow path may mean that the electrode is provided at a junction between the capillary flow path and first/second flow path. Alternatively, the feature that an electrode is "near (optionally, *at*)" an end of the capillary flow path may mean that the electrode is provided in the intermediate portion of the first/second flow path, which may be understood as being *adjacent to* the junction between the capillary flow path and first/second flow path.

According to an embodiment of the present invention, electrophoresis is performed in a state in which flow paths through which the sample solution and the running solution flow are provided at each of the upstream side and the downstream side of the capillary without a reservoir structure, and each of the sample solution in the flow path at the upstream side and the running solution in the flow path at the downstream side is interposed in the insulating fluid, so that it is possible to prevent electric leakage to the flow path through the electrodes provided at both ends of the capillary.

### BRIEF DESCRIPTION OF THE DRAWINGS

Exemplary embodiments will be described in detail based on the following figures, wherein:
Fig. 1A is a schematic view illustrating an overview of an electrophoresis unit of a first embodiment;
Fig. 1B is a schematic view illustrating a state in which a running solution is introduced into a second flow path in the electrophoresis unit of Fig. 1A;
Fig. 1C is a schematic view illustrating a state in which insulating fluid is introduced into the second flow path from the state of Fig. 1B;
Fig. 1D is a schematic view illustrating a state in which the capillary flow path is filled with the running solution from the state of Fig. 1C;
Fig. 1E is a schematic view illustrating a state in which a sample solution and insulating fluid are introduced into the first flow path and electrophoresis is performed from the state of Fig. 1D;
Fig. 2A is a schematic view illustrating an overview of an electrophoresis unit of a second embodiment;
Fig. 2B is a schematic view illustrating a state in which a running solution is introduced into a second flow path in the electrophoresis unit of Fig. 2A;
Fig. 2C is a schematic view illustrating a state in which a capillary flow path is filled with the running solution from the state of Fig. 2B;
Fig. 2D is a schematic view illustrating a state in which a sample solution is introduced into a first flow path from the state of Fig. 2C;
Fig. 2E is a schematic view illustrating a state in which insulating fluid is introduced into the first flow path and the second flow path from the state of Fig. 2D;
Fig. 2F is a schematic view illustrating a state in which the first flow path and the second flow path are opened to outside air pressure and electrophoresis is performed from the state of Fig. 2E;
Fig. 3A is a schematic view illustrating an overview of an electrophoresis unit of a third embodiment;
Fig. 3B is a schematic view illustrating a state in which a running solution is introduced into a second flow path in the electrophoresis unit of Fig. 3A;
Fig. 3C is a schematic view illustrating a state in which insulating fluid is introduced into the second flow path from the state of Fig. 3B;
Fig. 3D is a schematic view illustrating a state in which cleaning liquid is introduced into the second flow path from the state of Fig. 3C;
Fig. 3E is a schematic view illustrating a state in which a capillary flow path is filled with the running solution from the state of Fig. 3D;
Fig. 3F is a schematic view illustrating a state in which a sample solution, insulating fluid, and the cleaning liquid are introduced into the first flow path in this order from the state of Fig. 3E;
Fig. 3G is a schematic view illustrating a state in which, the first flow path and the second flow path are opened to outside air pressure while insulating fluid is introduced into the first flow path and the second flow path, and electrophoresis is performed from the state of Fig. 3F;
Fig. 4A is a schematic view illustrating an overview of an electrophoresis unit of a fourth embodiment;
Fig. 4B is a schematic view illustrating a state in which pre-cleaning liquid is introduced into a second flow path in the electrophoresis unit of Fig. 4A;
Fig. 4C is a schematic view illustrating a state in which insulating fluid is introduced into the second flow path from the state of Fig. 4B;
Fig. 4D is a schematic view illustrating a state in which a running solution is introduced into the second flow path from the state of Fig. 4C;
Fig. 4E is a schematic view illustrating a state in which insulating fluid is introduced again into the second flow path from the state of Fig. 4D;
Fig. 4F is a schematic view illustrating a state in which cleaning liquid is introduced into the second flow path from the state of Fig. 4E;
Fig. 4G is a schematic view illustrating a state in which a capillary flow path is filled with the running solution from the state of Fig. 4F; and
Fig. 4H is a schematic view illustrating a state in which the pre-cleaning liquid, insulating fluid, the sample solution, insulating fluid, and the cleaning liquid are introduced into the first flow path in this order, subsequently the first flow path and the second flow path are opened to outside air pressure, and electrophoresis is performed from the state of Fig. 4G.

### DETAILED DESCRIPTION

Hereinafter, embodiments in the invention will be described with reference to the drawings. The same reference numerals in the drawings indicate the same portions without any particular description. Moreover, the respective members and parts illustrated in each of the drawings are merely schematically illustrated, and the size and positional relationship of actual products are not necessarily accurately illustrated. In each of the drawings referred to below, the right side of a capillary flow path 11 is defined as an upstream side, and the left side is defined as a downstream side, with respect to flow of a sample solution.

### (1) First Embodiment

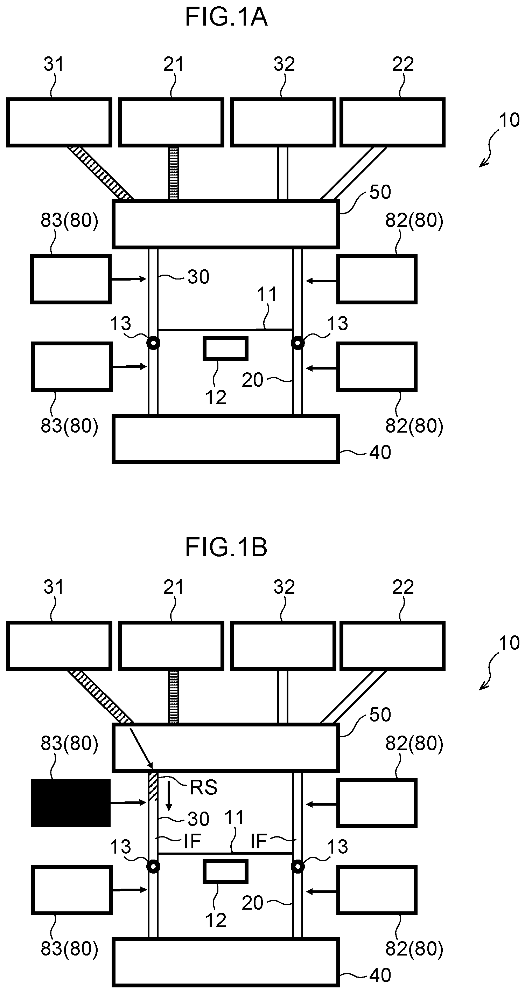

A first embodiment will be described with reference to Fig. 1A to Fig. 1E. Fig. 1A is a schematic view illustrating an overview of an electrophoresis unit 10 of the first embodiment. Moreover, Fig. 1B to Fig. 1E schematically illustrate a schematic procedure in which a capillary flow path 11 is filled with a running solution RS, and a sample solution SS is introduced into the capillary flow path 11 at the start of electrophoresis in the present embodiment.

The electrophoresis unit 10 according to the present embodiment includes: the capillary flow path 11 through which a sample solution SS moves from an upstream side to downstream side in a state in which the capillary flow path 11 is filled with a running solution RS; a pair of electrodes 13 installed near (at) both ends of the capillary flow path 11; a detector 12 provided at an intermediate part of the capillary flow path 11; a first flow path 20, an intermediate part of which communicates with the upstream side of the capillary flow path 11, the first flow path 20 extending in a direction intersecting a longitudinal direction of the capillary flow path 11; a second flow path 30, an intermediate part of which communicates with the downstream side of the capillary flow path 11, the second flow path 30 extending in the direction intersecting the longitudinal direction of the capillary flow path 11; a first supply source 21 configured to supply the sample solution SS to the first flow path 20; a second supply source 31 configured to supply the running solution RS to the second flow path 30; a pump 40 configured to move the running solution RS from the second supply source 31 to the second flow path 30 and to move the sample solution SS from the first supply source 21 to the first flow path 20; a first auxiliary supply source 22 configured to supply, to the first flow path 20, insulating fluid IF that insulates the sample solution SS in contact with the electrode 13 in the first flow path 20; a second auxiliary supply source 32 configured to supply, to the second flow path 30, insulating fluid IF that insulates the running solution RS in contact with the electrode 13 in the second flow path 30; and a switch 50 configured to switch between supply and stop of fluid at least from the first supply source 21 and the second supply source 31 to the first flow path 20 and the second flow path 30.

The capillary flow path 11 is a capillary tube into which liquid is introduced by using a capillary phenomenon, or by pressurizing or aspirating, and is formed of a translucent material such as glass or transparent plastic. In the electrophoresis unit 10, in a state in which the capillary flow path 11 is filled with the running solution RS, a voltage is applied via the pair of electrodes 13 installed near (at) both ends of the capillary flow path 11, so that the sample solution SS moves in the downstream direction to the opposite end in the capillary flow path 11. Herein, a side at which the sample solution SS is supplied to the capillary flow path 11 is referred to as an upstream side, and a side to which the sample solution SS moves is referred to as downstream side.

The running solution RS is, for example, a buffer solution or the like that is variously selected depending on the purpose of electrophoresis. The sample solution SS is, for example, a liquid sample collected from a living body, such as blood, plasma, saliva, or urine, and is preferably diluted to a suitable concentration with an appropriate buffer solution or the like according to the condition of electrophoresis.

The detector 12 is a device that optically detects a separated component of the sample solution SS having been moved, at the intermediate part of the capillary flow path 11.

The first flow path 20 is a flow path through which the sample solution SS is supplied from the first supply source 21 to an upstream end of the capillary flow path 11 by the pump 40. The first flow path 20 intersects with the longitudinal direction of the capillary flow path 11, extends in any direction (preferably, a direction orthogonal to the longitudinal direction of the capillary flow path 11), and communicates with the upstream end of the capillary flow path 11 at the intermediate part of the first flow path 20. The first supply source 21 can be implemented with, for example, a reservoir or a syringe capable of temporarily storing the sample solution SS. Any excess sample solution SS is discharged from an end of the first flow path 20 (i.e., from a side opposite to the first supply source 21). The pump 40 may be provided at either a supply side or a discharge side of first flow path 20, or may be provided at both sides. In a case in which the pump 40 is provided at the supply side, the pump 40 moves (pushes) the sample solution SS to the first flow path 20. In a case in which the pump 40 is provided at the discharge side, the pump 40 aspirates the sample solution SS from the first flow path 20. In either case, the sample solution SS moves from the first supply source 21 to the first flow path 20.

The second flow path 30 is a flow path through which the running solution RS is supplied from the second supply source 31 to a downstream end and the inside of the capillary flow path 11 by the pump 40. The second flow path 30 intersects with the longitudinal direction of the capillary flow path 11, extends in any direction (preferably, a direction orthogonal to the longitudinal direction of the capillary flow path 11), and communicates with the downstream end of the capillary flow path 11 at the intermediate part of the second flow path 30. The second supply source 31 can be implemented with, for example, a reservoir or a syringe capable of temporarily storing the running solution RS. Any excess running solution RS is discharged from an end of the second flow path 30 (i.e., from a side opposite to the second supply source 31). The pump 40 may be provided at either a supply side or a discharge side of the second flow path 30, or may be provided at both sides. In a case in which the pump 40 is provided at the supply side, the pump 40 moves (pushes) the running solution RS to the second flow path 30. In a case in which the pump 40 is provided at the discharge side, the pump 40 aspirates the running solution RS from the second flow path 30. In either case, the running solution RS moves from the second supply source 31 to the second flow path 30. In the present embodiment, the pump 40 is provided at the discharge side of the first flow path 20 and the second flow path 30.

The insulating fluid IF is fluid having insulating properties used for blocking, in the first flow path 20 and the second flow path 30, electric conduction through the sample solution SS and the running solution RS in contact with the electrodes 13 to the supply side or the discharge side. As the insulating fluid IF, air is most preferable, but other gas (e.g., nitrogen, carbon dioxide, and the like) or liquid (e.g., vegetable oil, mineral oil, and the like) having high insulating properties may be used. The insulating fluid IF is supplied from the first auxiliary supply source 22 and the second auxiliary supply source 32 to the first flow path 20 and the second flow path 30, respectively. The first auxiliary supply source 22 and the second auxiliary supply source 32 can be implemented with ventilation passages or valves opened to the outside from the first flow path 20 and the second flow path 30, respectively.

The switch 50 switches between supply and stop of fluid at least from the first supply source 21 and the second supply source 31 to the first flow path 20 and the second flow path 30. In other words, the switch 50 is a mechanism interposed between the first supply source 21 and the first flow path 20 and between the second supply source 31 and the second flow path 30, being capable of switching the flow path of the fluid. The switch 50 can be implemented with, for example, a rotary valve, a mechanism in which a plurality of valves are combined, or a mechanism moving a nozzle. As in the present embodiment, the first auxiliary supply source 22 and the second auxiliary supply source 32 may introduce the insulating fluid IF into the first flow path 20 and the second flow path 30 via the switch 50, respectively. In the present embodiment, the first supply source 21 and the second supply source 31, as well as the first auxiliary supply source 22 and the second auxiliary supply source 32, are provided at the supply side of the first flow path 20 and the second flow path 30 via the switch 50.

Moreover, as in the present embodiment, fluid detection sensors 80 configured to detect arrival of fluid may be attached to the first flow path 20 and the second flow path 30. In the present embodiment, a first sensor 82 is provided at each of the supply side and the discharge side with respect to the electrode 13 in the first flow path 20. Moreover, a second sensor 83 is provided at each of the supply side and the discharge side with respect to the electrode 13 in the second flow path 30.

Hereinafter, procedures from supply of the running solution RS and the sample solution SS to execution of electrophoresis in the electrophoresis unit 10 of the present embodiment will be described with reference to Fig. 1B to Fig. 1E.

First, before the running solution RS and the sample solution SS are supplied, each of the first flow path 20 and the second flow path 30 is filled with air serving as insulating fluid IF. From this state, as illustrated in Fig. 1B, the switch 50 connects the second supply source 31 to the second flow path 30, and the running solution RS is supplied to the second flow path 30 by aspiration by the pump 40. Then, when the second sensor 83 at the supply side detects a tip of the running solution RS, the supply of the running solution RS is stopped.

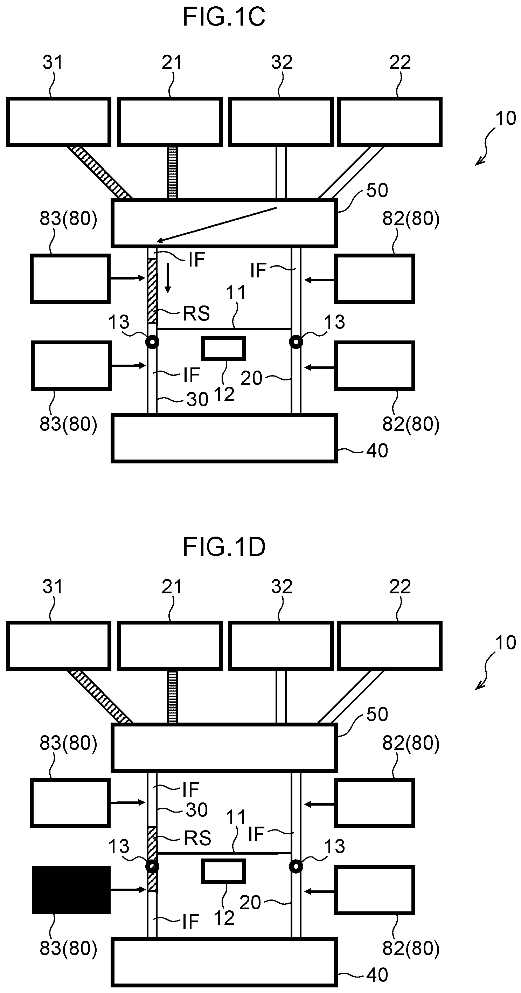

Next, as illustrated in Fig. 1C, the switch 50 switches the supply sources to connect the second auxiliary supply source 32 to the second flow path 30, and insulating fluid IF is supplied to the second flow path 30 by aspiration by the pump 40. Then, as illustrated in Fig. 1D, when the sensor at the discharge side detects the tip of the running solution RS, the supply of the insulating fluid IF is stopped. In this state, the running solution RS is retained in the downstream side of the capillary flow path 11, and the running solution RS is interposed between the insulating fluid IF located at the supply side and the insulating fluid IF located at the discharge side with respect to the position of the electrode 13. In this state, the running solution RS is introduced into the capillary flow path 11 from the downstream side by a capillary phenomenon, pressurizing, aspirating, or the like. In a case in which the capillary phenomenon is used, it is necessary to open both ends of the capillary flow path 11 to the atmospheric pressure. On the other hand, in a case in which the running solution RS is introduced into the capillary flow path 11 by applying negative pressure or positive pressure, it is necessary to generate a pressure difference between the flow paths at both ends of the capillary.

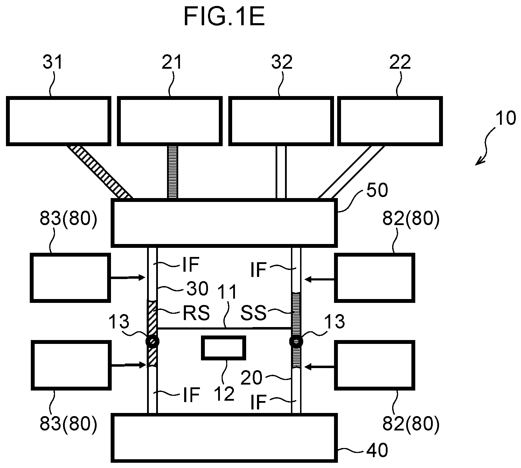

Thereafter, the switch 50 switches the supply sources to connect the first supply source 21 to the first flow path 20, and the sample solution SS is supplied to the first flow path 20 by aspiration by the pump 40. Then, when the first sensor 82 at the supply side detects a tip of the sample solution SS, the supply of the sample solution SS is stopped. Next, the switch 50 switches the supply sources to connect the first auxiliary supply source 22 to the first flow path 20, and insulating fluid IF is supplied to the first flow path 20 by aspiration by the pump 40. Then, as illustrated in Fig. 1E, when the sensor at the discharge side detects the tip of the sample solution SS, the supply of the insulating fluid IF is stopped. In this state, the sample solution SS is retained in the upstream side of the capillary flow path 11, and the sample solution SS is interposed between the insulating fluid IF located at the supply side and the insulating fluid IF located at the discharge side with respect to the position of the electrode 13. In this state, a voltage is applied between the electrodes 13 at both ends of the capillary flow path 11, whereby an electroosmotic flow is generated, so that the sample solution SS moves toward the downstream side in the capillary flow path 11. The components separated by electrophoresis are optically detected by the detector 12. At this time, since the electrodes 13 provided in the first flow path 20 and the second flow path 30 are interposed between the insulating fluid IF on both the supply side and the discharge side, electric leakage from the electrodes 13 to the supply side and the discharge side of the electrophoresis unit 10 can be prevented.

The present embodiment described above implements an electrophoresis method that uses the capillary flow path 11 through which the sample solution SS moves from the upstream side to the downstream side in a state in which the capillary flow path 11 is filled with the running solution, the detector 12 provided at the intermediate part of the capillary flow path 11, the first flow path 20 the intermediate part of which communicates with the upstream side of the capillary flow path 11, the first flow path 20 extending in the direction intersecting the longitudinal direction of the capillary flow path 11, and the second flow path 30 the intermediate part of which communicates with the downstream side of the capillary flow path 11, the second flow path 30 extending in the direction intersecting the longitudinal direction of the capillary flow path 11, the electrophoresis method including: introducing the running solution RS into the second flow path 30; introducing the running solution RS from the second flow path 30 into the capillary flow path 11; introducing the sample solution SS into the first flow path 20; introducing insulating fluid IF into the second flow path 30 so as to interpose the running solution RS at the position in communication with the capillary flow path 11 in the insulating fluid IF; introducing insulating fluid IF into the first flow path 20 so as to interpose the sample solution SS at the position in communication with the capillary flow path 11 in the insulating fluid IF; and applying the voltage between the upstream side and the downstream side of the capillary flow path 11.

In the electrophoresis method described above, it is preferable to further include: introducing insulating fluid IF into the second flow path 30 before and after introducing the running solution RS into the second flow path 30; and introducing insulating fluid IF into the first flow path 20 before and after introducing the sample solution SS into the first flow path 20.

In the present embodiment, since it is not necessary to fill the entire flow path with liquid, the amount of liquid for measurement of the sample by electrophoresis can be minimized. Herein, the volume of the flow path can be appropriately designed. In this case, the electrophoresis unit 10 can also be designed to, after introducing a known amount of fluid into the flow path, introduce another fluid. The fluid detection sensor 80 described above is unnecessary in this case.

Note that, although, in the present embodiment, the pump 40 is provided as a liquid discharge unit at the discharge side of the first flow path 20 and the second flow path 30, the pump 40 may be provided as part of the composition of the switch 50 at the supply side. Moreover, the first auxiliary supply source 22 and the second auxiliary supply source 32 may be integrated into a single structure to be shared by the first flow path 20 and the second flow path 30.

### (2) Second Embodiment

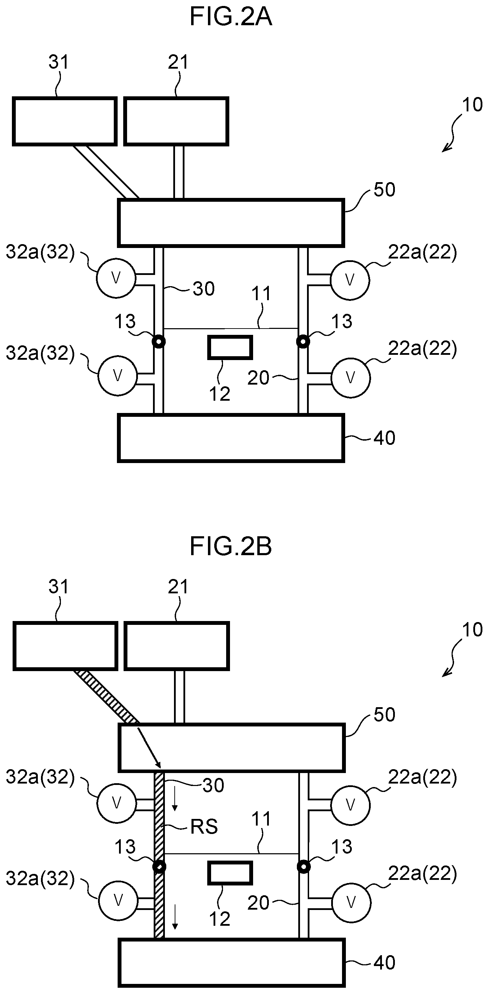

A second embodiment will be described with reference to Fig. 2A to Fig. 2F. Fig. 2A is a schematic view illustrating an overview of the electrophoresis unit 10 of the second embodiment. Moreover, Fig. 2B to Fig. 2F schematically illustrate a schematic procedure in which the running solution RS and the sample solution SS are introduced into the capillary flow path 11 and electrophoresis is performed in the present embodiment.

The configurations of the capillary flow path 11, the detector 12, the first flow path 20, and the second flow path 30, and the meanings of the sample solution SS, the running solution RS, and the insulating fluid IF are the same as those of the first embodiment.

In the present embodiment, the first supply source 21 and the second supply source 31 are provided at the supply side of the first flow path 20 and the second flow path 30 via the switch 50. Similarly to the first embodiment, the pump 40 is provided at the discharge side of the first flow path 20 and the second flow path 30.

In the electrophoresis unit 10 in the present embodiment, a first valve 22a configured to open the first flow path 20 to the atmospheric pressure is provided as the first auxiliary supply source 22, and a second valve 32a configured to open the second flow path 30 to atmospheric pressure is provided as the second auxiliary supply source 32. In the present embodiment, the first valve 22a is provided at each of the supply side and the discharge side with respect to the electrode 13 in the first flow path 20. Moreover, the second valve 32a is provided at each of the supply side and the discharge side with respect to the electrode 13 in the second flow path 30.

Hereinafter, procedures from supply of the running solution RS and the sample solution SS to execution of electrophoresis in the electrophoresis unit 10 of the present embodiment will be described with reference to Fig. 2B to Fig. 2F.

First, as illustrated in Fig. 2B, the switch 50 connects the second supply source 31 to the second flow path 30 to open the flow path, and the running solution RS is supplied to the second flow path 30 by aspiration by the pump 40. When the second flow path 30 is filled with the running solution RS, the switch 50 closes the flow path to stop the supply of the running solution RS.

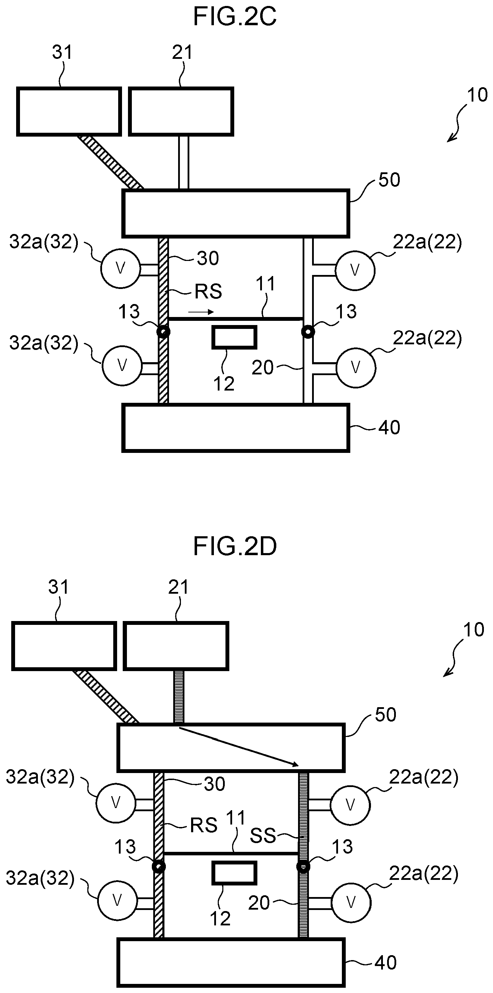

Next, as illustrated in Fig. 2C, the running solution RS is introduced into the capillary flow path 11 from the downstream side by a capillary phenomenon, pressurizing, aspirating, or the like. In a case in which the capillary phenomenon is used, it is necessary to open both ends of the capillary flow path 11 to the atmospheric pressure. On the other hand, in a case in which the running solution RS is introduced into the capillary flow path 11 by applying negative pressure or positive pressure, it is necessary to generate a pressure difference between the flow paths at both ends of the capillary.

Next, as illustrated in Fig. 2D, the switch 50 connects the first supply source 21 to the first flow path 20 to open the flow path, and the sample solution SS is supplied to the first flow path 20 by aspiration by the pump 40. When the first flow path 20 is filled with the sample solution SS, the switch 50 closes the flow path to stop the supply of the sample solution SS.

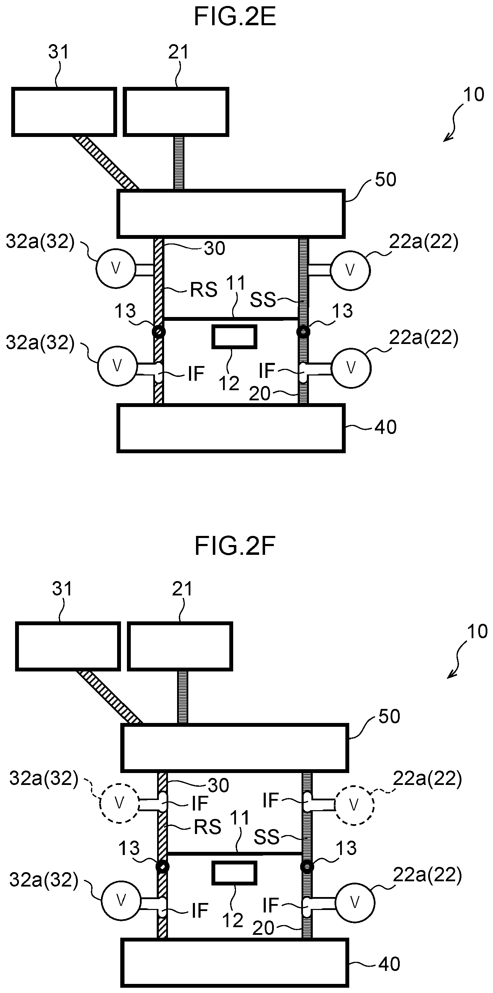

Subsequently, as illustrated in Fig. 2E, in the first flow path 20 and the second flow path 30, the first valve 22a and the second valve 32a at the discharge side are opened, and insulating fluid IF (e.g., air) is introduced from the outside at the discharge side with respect to each of the electrodes 13 of the first flow path 20 and the second flow path 30. Herein, since the supply side of the first flow path 20 and the supply side of the second flow path 30 are closed spaces, the fluid in the capillary flow path 11 does not move. Then, the first valve 22a and the second valve 32a at the discharge side are closed.

Then, as illustrated in Fig. 2F, in the first flow path 20 and the second flow path 30, the first supply source 21 and the second supply source 31 are communicated with each other by opening of the switch 50, and at the same time, the first valve 22a and the second valve 32a at the supply side are opened, and insulating fluid IF (e.g., air) is introduced from the outside at the supply side with respect to each of the electrodes 13 of the first flow path 20 and the second flow path 30. After the insulating fluid IF is introduced, in the first flow path 20 and the second flow path 30, the communication with the first supply source 21 and the communication with the second supply source 31 are blocked by closing of the switch 50. In this way, by opening the first valve 22a and the second valve 32a at the supply side of the first flow path 20 and the second flow path 30, both ends of the capillary flow path 11 are opened to the atmospheric pressure, and the external force due to the differential pressure with the outside air pressure does not act on the fluid in the capillary flow path 11.

In this stage, the running solution RS is retained in the downstream side of the capillary flow path 11, and the running solution RS is interposed between the insulating fluid IF located at the supply side and the insulating fluid IF located at the discharge side with respect to the position of the electrode 13. At the same time, the sample solution SS is retained in the upstream side of the capillary flow path 11, and the sample solution SS is interposed between the insulating fluid IF located at the supply side and the insulating fluid IF located at the discharge side with respect to the position of the electrode 13. In this state, a voltage is applied between the electrodes 13 at both ends of the capillary flow path 11, whereby an electroosmotic flow is generated, so that the sample solution SS moves toward the downstream side in the capillary flow path 11. The components separated by electrophoresis are optically detected by the detector 12. At this time, since the electrodes 13 provided in the first flow path 20 and the second flow path 30 are interposed between the insulating fluid IF on both the supply side and the discharge side, electric leakage from the electrodes 13 to the supply side and the discharge side of the electrophoresis unit 10 can be prevented.

The present embodiment described above implements an electrophoresis method that uses the capillary flow path 11 through which the sample solution SS moves from the upstream side to the downstream side, the detector 12 provided at the intermediate part of the capillary flow path 11, the first flow path 20, the intermediate part of which communicates with the upstream side of the capillary flow path 11, the first flow path 20 extending in the direction intersecting the longitudinal direction of the capillary flow path 11, and the second flow path 30 the intermediate part of which communicates with the downstream side of the capillary flow path 11, the second flow path 30 extending in the direction intersecting the longitudinal direction of the capillary flow path 11, the electrophoresis method including: introducing the running solution RS into the second flow path 30; introducing the running solution RS from the second flow path 30 into the capillary flow path 11; introducing the sample solution SS into the first flow path 20; introducing insulating fluid IF into the second flow path 30 so as to interpose the running solution RS at the position in communication with the capillary flow path 11 in the insulating fluid IF; introducing insulating fluid IF into the first flow path 20 so as to interpose the sample solution SS at the position in communication with the capillary flow path 11 in the insulating fluid IF; and applying the voltage between the upstream side and the downstream side of the capillary flow path 11.

In the electrophoresis method described above, it is preferable to include: introducing the running solution RS into the second flow path 30 and then introducing the insulating fluid IF so as to interpose the position in communication with the capillary flow path 11 in the insulating fluid IF; and introducing the sample solution SS into the first flow path 20 and then introducing insulating fluid IF so as to interpose the position in communication with the capillary flow path 11 in the insulating fluid IF.

Note that, although, in the present embodiment, the pump 40 is provided as a liquid discharge unit at the discharge side of the first flow path 20 and the second flow path 30, the pump 40 may be provided as part of the composition of the switch 50 at the supply side.

### (3) Third Embodiment

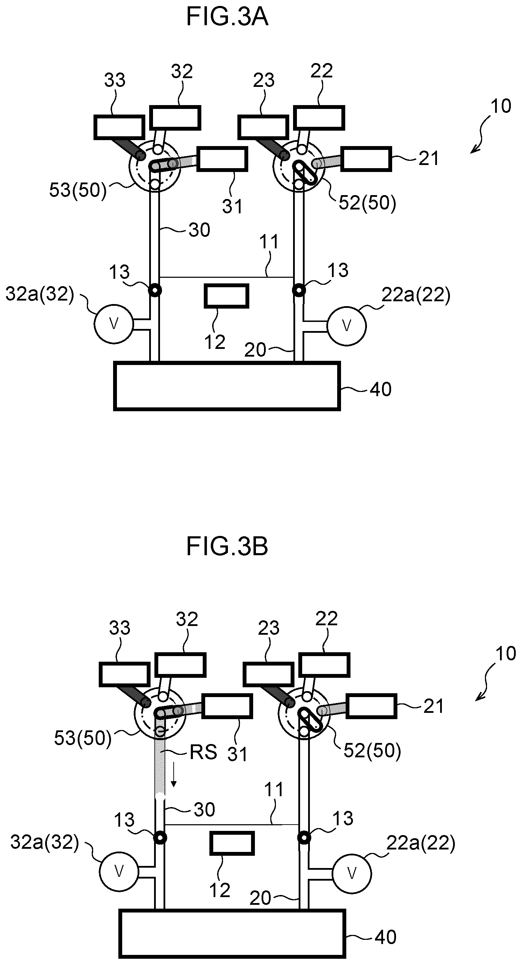

A third embodiment will be described with reference to Fig. 3A to Fig. 3G. Fig. 3A is a schematic view illustrating an overview of the electrophoresis unit 10 of the third embodiment. Moreover, Fig. 3B to Fig. 3G schematically illustrate a schematic procedure in which the running solution RS and the sample solution SS are introduced into the capillary flow path 11 and electrophoresis is performed in the present embodiment.

The configurations of the capillary flow path 11, the detector 12, the first flow path 20, and the second flow path 30, and the meanings of the sample solution SS, the running solution RS, and the insulating fluid IF are the same as those of the first embodiment.

In the present embodiment, the first supply source 21, the first auxiliary supply source 22, and a cleaning liquid supply source 23 are provided at the supply side of the first flow path 20 via a first switch 52 serving as the switch 50. Moreover, the second supply source 31, the second auxiliary supply source 32, and a cleaning liquid supply source 33 are provided at the supply side of the second flow path 30 via a second switch 53 serving as the switch 50. The first auxiliary supply source 22 and the second auxiliary supply source 32 have the same meaning as in the first embodiment. Both the first switch 52 and the second switch 53 include a rotary valve, a mechanism in which a plurality of valves are combined, or a mechanism moving a nozzle.

The cleaning liquid supply sources 23, 33 supply cleaning liquid CL for cleaning the first flow path 20, the second flow path 30, and the capillary flow path 11 after the end of electrophoresis, to the first flow path 20 and the second flow path 30, respectively. As the cleaning liquid CL, for example, liquid in which a surfactant is added to appropriate buffer solution or the like can be used. That is, in the present embodiment, the cleaning liquid CL is introduced into the first flow path 20 via the switch 50 after the sample solution SS is introduced into the first flow path 20, and the cleaning liquid CL is introduced into the second flow path 30 via the switch 50 after the running solution RS is introduced into the second flow path 30.

Moreover, in the present embodiment, the first valve 22a configured to open the first flow path 20 to atmospheric pressure is further provided as the first auxiliary supply source 22 at the discharge side with respect to the position of the electrode 13, and the second valve 32a configured to open the second flow path 30 to the atmospheric pressure is further provided as the second auxiliary supply source 32 at the discharge side with respect to the position of the electrode 13. Similarly to the first embodiment, the pump 40 is provided at the discharge side of the first flow path 20 and the second flow path 30.

Hereinafter, from supply of the running solution RS and the sample solution SS to execution of electrophoresis in the electrophoresis unit 10 of the present embodiment will be described with reference to Fig. 3B to Fig. 3G.

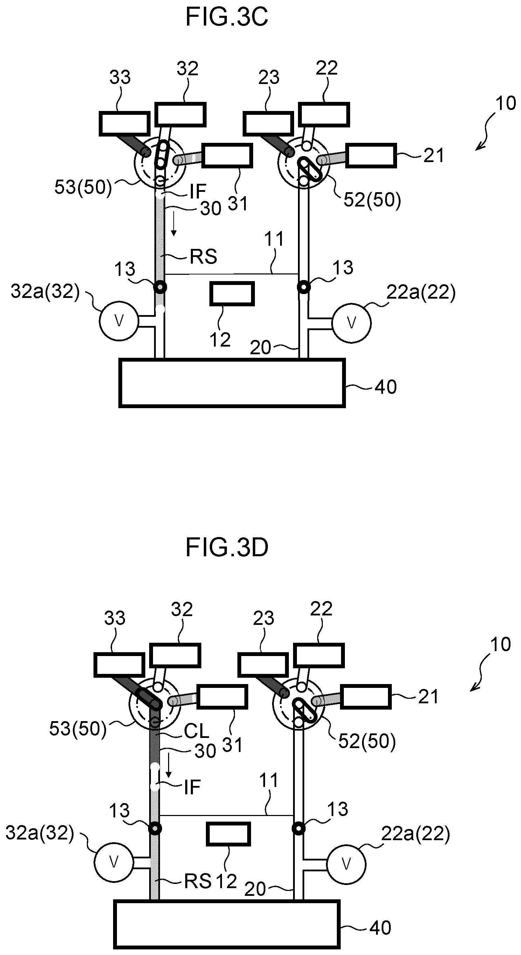

First, as illustrated in Fig. 3B, the second switch 53 connects the second supply source 31 to the second flow path 30, and the running solution RS is supplied to the second flow path 30 by aspiration by the pump 40. Subsequently, as illustrated in Fig. 3C, the second switch 53 switches the supply sources to connect the second auxiliary supply source 32 to the second flow path 30, and aspiration by the pump 40 supplies insulating fluid IF to the second flow path 30.

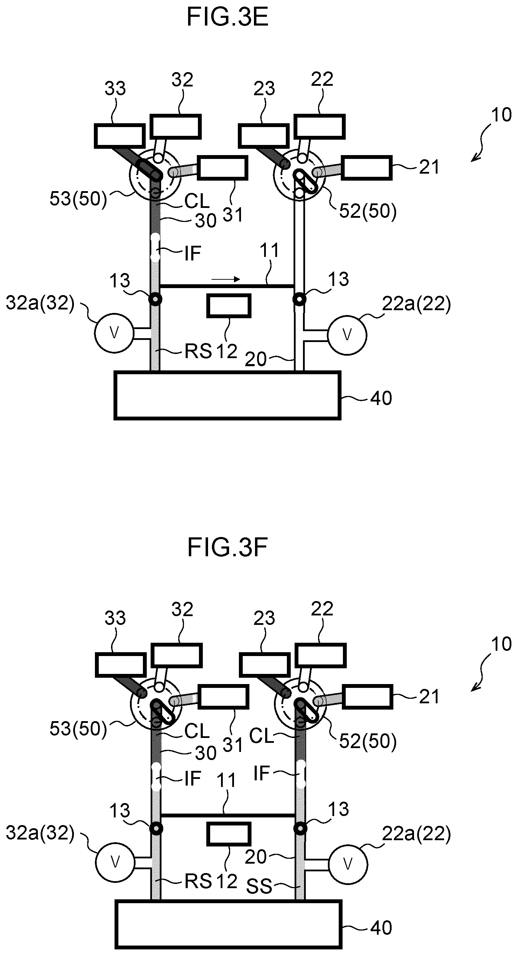

Next, as illustrated in Fig. 3D, the second switch 53 switches the supply sources to connect the cleaning liquid supply source 33 to the second flow path 30, and the cleaning liquid CL is supplied to the second flow path 30 by aspiration by the pump 40. Then, as illustrated in Fig. 3E, the running solution RS is introduced into the capillary flow path 11 from the downstream side by a capillary phenomenon, pressurizing, aspirating, or the like. In a case in which the capillary phenomenon is used, it is necessary to open both ends of the capillary flow path 11 to the atmospheric pressure. On the other hand, in a case in which the running solution RS is introduced into the capillary flow path 11 by applying negative pressure or positive pressure, it is necessary to generate a pressure difference between the flow paths at both ends of the capillary.

From this state, the first switch 52 connects the first supply source 21 to the first flow path 20, and the sample solution SS is supplied to the first flow path 20 by aspiration by the pump 40. Subsequently, the first switch 52 switches the supply sources to connect the first auxiliary supply source 22 to the first flow path 20, and insulating fluid IF is supplied to the first flow path 20 by aspiration by the pump 40. Next, the first switch 52 switches the supply sources to connect the cleaning liquid supply source 23 to the first flow path 20, and the cleaning liquid CL is supplied to the first flow path 20 by aspiration by the pump 40. Then, as illustrated in Fig. 3F, both the first switch 52 and the second switch 53 transition to a closed state, and the supply side of the first flow path 20 and the supply side of the second flow path 30 become closed spaces.

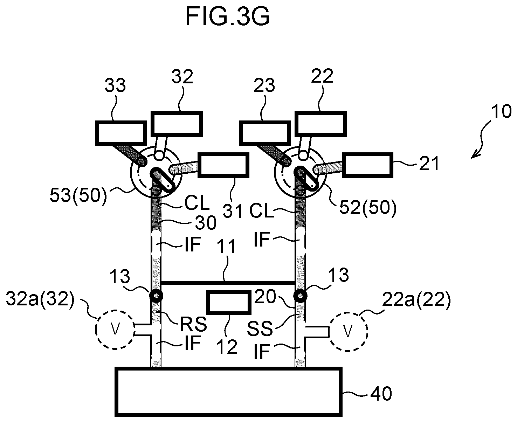

Subsequently, as illustrated in Fig. 3G, in the first flow path 20 and the second flow path 30, the first valve 22a and the second valve 32a at the discharge side are opened, and insulating fluid IF is introduced from the outside at the discharge side with respect to each of the electrodes 13 of the first flow path 20 and the second flow path 30. In this way, by opening the first valve 22a and the second valve 32a at the discharge side in the first flow path 20 and the second flow path 30, both ends of the capillary flow path 11 are opened to the atmospheric pressure, and the external force due to the differential pressure with the outside air pressure does not act on the fluid in the capillary flow path 11.

In this state, a voltage is applied between the electrodes 13 at both ends of the capillary flow path 11, whereby an electroosmotic flow is generated, so that the sample solution SS moves toward the downstream side in the capillary flow path 11. The components separated by electrophoresis are optically detected by the detector 12. At this time, since the electrodes 13 provided in the first flow path 20 and the second flow path 30 are interposed between the insulating fluid IF on both the supply side and the discharge side, electric leakage from the electrodes 13 to the supply side and the discharge side of the electrophoresis unit 10 can be prevented.

After the electrophoresis is completed, aspiration in the first flow path 20 and the second flow path 30 by the pump 40 can cause the first flow path 20, the second flow path 30, and the capillary flow path 11 to be cleaned with the cleaning liquid CL.

The present embodiment described above implements an electrophoresis method that uses the capillary flow path 11 through which the sample solution SS moves from the upstream side to the downstream side, the detector 12 provided at the intermediate part of the capillary flow path 11, the first flow path 20, the intermediate part of which communicates with the upstream side of the capillary flow path 11, the first flow path 20 extending in the direction intersecting the longitudinal direction of the capillary flow path 11, and the second flow path 30, the intermediate part of which communicates with the downstream side of the capillary flow path 11, the second flow path 30 extending in the direction intersecting the longitudinal direction of the capillary flow path 11, the electrophoresis method including: introducing the running solution RS into the second flow path 30; introducing the running solution RS from the second flow path 30 into the capillary flow path 11; introducing the sample solution SS into the first flow path 20; introducing insulating fluid IF into the second flow path 30 so as to interpose the running solution RS at the position in communication with the capillary flow path 11 in the insulating fluid IF; introducing insulating fluid IF into the first flow path 20 so as to interpose the sample solution SS at the position in communication with the capillary flow path 11 in the insulating fluid IF; and applying the voltage between the upstream side and the downstream side of the capillary flow path 11.

In the electrophoresis method described above, it is preferable to further include: introducing insulating fluid IF into the second flow path 30 after introducing the running solution RS into the second flow path 30, and with respect to the insulating fluid IF, further introducing insulating fluid IF into the second flow path 30 so as to interpose the position in communication with the capillary flow path 11 in the insulating fluid IF; and introducing insulating fluid IF into the first flow path 20 after introducing the sample solution SS into the first flow path 20, and with respect to the insulating fluid IF, further introducing insulating fluid IF into the first flow path 20 so as to interpose the position in communication with the capillary flow path 11 in the insulating fluid IF.

In the electrophoresis method described above, it is preferable to further include: introducing the cleaning liquid CL into the second flow path 30 after introducing the running solution RS into the second flow path 30; and introducing the cleaning liquid CL into the first flow path 20 after introducing the sample solution SS into the first flow path 20.

Note that, although, in the present embodiment, the pump 40 is provided as a liquid discharge unit at the discharge side of the first flow path 20 and the second flow path 30, the pump 40 may be provided as part of the composition of the switch 50 at the supply side. The first auxiliary supply source 22 and the second auxiliary supply source 32 may be integrated into a single structure to be shared by the first flow path 20 and the second flow path 30. The two cleaning liquid supply sources 23, 33 may be integrated into a single structure to be shared by the first flow path 20 and the second flow path 30.

### (4) Fourth Embodiment

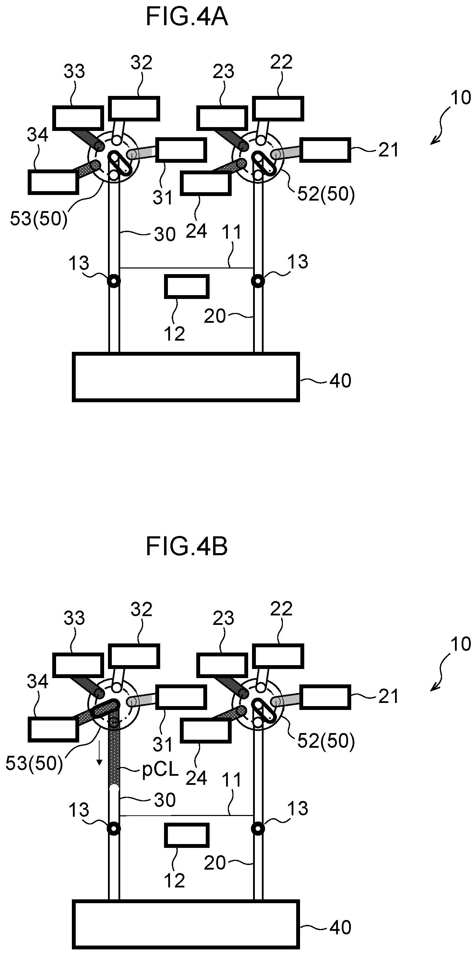

A fourth embodiment will be described with reference to Fig. 4A to Fig. 4H. Fig. 4A is a schematic view illustrating an overview of the electrophoresis unit 10 of the fourth embodiment. Moreover, Fig. 4B to Fig. 4H schematically illustrate a schematic procedure in which the running solution RS and the sample solution SS are introduced into the capillary flow path 11 and electrophoresis is performed in the present embodiment.

The configurations of the capillary flow path 11, the detector 12, the first flow path 20, and the second flow path 30, and the meanings of the sample solution SS, the running solution RS, and the insulating fluid IF are the same as those of the first embodiment.

In the present embodiment, the first supply source 21, the first auxiliary supply source 22, the cleaning liquid supply source 23, and a pre-cleaning liquid supply source 24 are provided at the supply side of the first flow path 20 via the first switch 52 serving as the switch 50. Moreover, the second supply source 31, the second auxiliary supply source 32, the cleaning liquid supply source 33, and a pre-cleaning liquid supply source 34 are provided at the supply side of the second flow path 30 via the second switch 53 serving as the switch 50. The first auxiliary supply source 22 and the second auxiliary supply source 32 have the same meaning as in the first embodiment. Both the first switch 52 and the second switch 53 include a rotary valve, a mechanism in which a plurality of valves are combined, or a mechanism moving a nozzle.

The pre-cleaning liquid supply sources 24, 34 supply pre-cleaning liquid pCL for cleaning the first flow path 20 and the second flow path 30 before the start of electrophoresis to the first flow path 20 and the second flow path 30, respectively. The cleaning liquid supply sources 23, 33 supply cleaning liquid CL for cleaning the first flow path 20, the second flow path 30, and the capillary flow path 11 after the end of electrophoresis, to the first flow path 20 and the second flow path 30, respectively. As the cleaning liquid CL and the pre-cleaning liquid pCL, for example, liquid in which a surfactant is added to appropriate buffer solution or the like can be used. That is, in the present embodiment, the pre-cleaning liquid pCL is introduced into the first flow path 20 via the switch 50 before the sample solution SS is introduced into the first flow path 20, and the pre-cleaning liquid pCL is introduced into the second flow path 30 via the switch 50 before the running solution RS is introduced into the second flow path 30. Furthermore, in the present embodiment, the cleaning liquid CL is introduced into the first flow path 20 via the switch 50 after the sample solution SS is introduced into the first flow path 20, and the cleaning liquid CL is introduced into the second flow path 30 via the switch 50 after the running solution RS is introduced into the second flow path 30.

Hereinafter, procedures from supply of the running solution RS and the sample solution SS to execution of electrophoresis in the electrophoresis unit 10 of the present embodiment will be described with reference to Fig. 4B to Fig 4H.

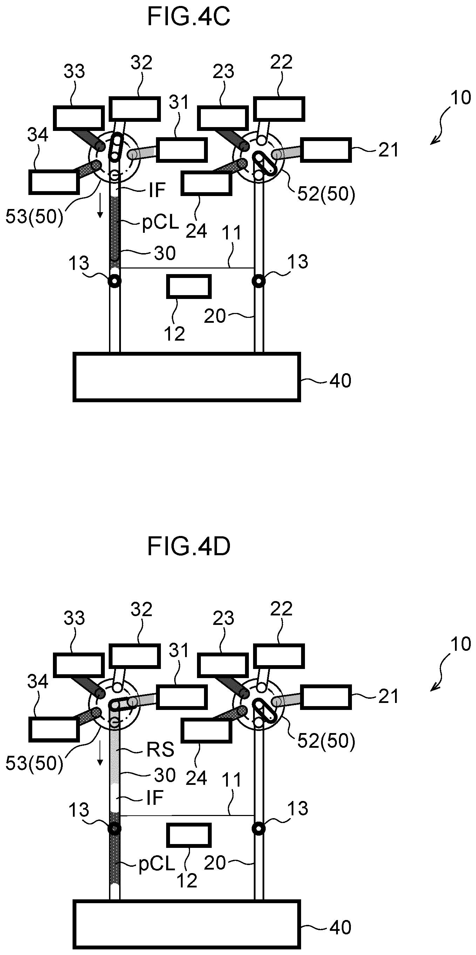

First, as illustrated in Fig. 4B, the second switch 53 connects the pre-cleaning liquid supply source 34 to the second flow path 30, and the pre-cleaning liquid pCL is supplied to the second flow path 30 by aspiration by the pump 40. Subsequently, as illustrated in Fig. 4C, the second switch 53 switches the supply sources to connect the second auxiliary supply source 32 to the second flow path 30, and insulating fluid IF is supplied to the second flow path 30 by aspiration by the pump 40.

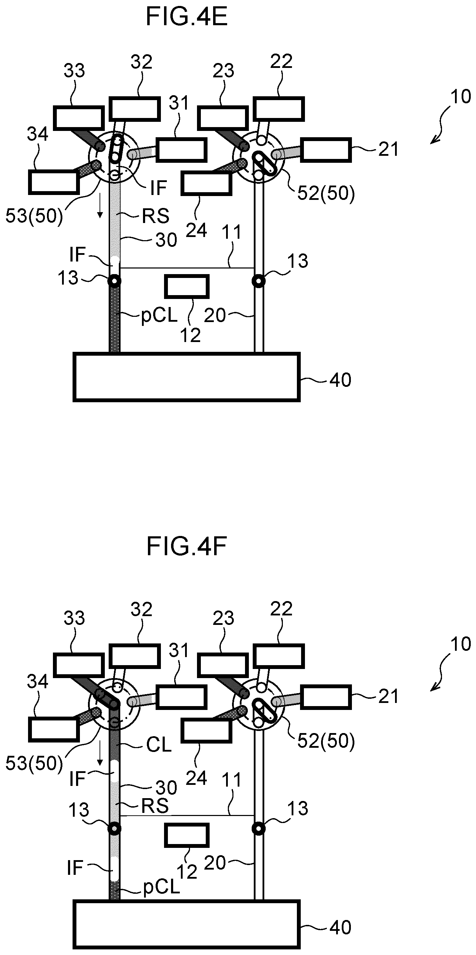

Next, as illustrated in Fig. 4D, switching the supply sources, the second switch 53 connects the second supply source 31 to the second flow path 30, and the running solution RS is supplied to the second flow path 30 by aspiration by the pump 40. Subsequently, as illustrated in Fig. 4E, the second switch 53 switches the supply sources to connect the second auxiliary supply source 32 to the second flow path 30, and insulating fluid IF is supplied to the second flow path 30 by aspiration by the pump 40.

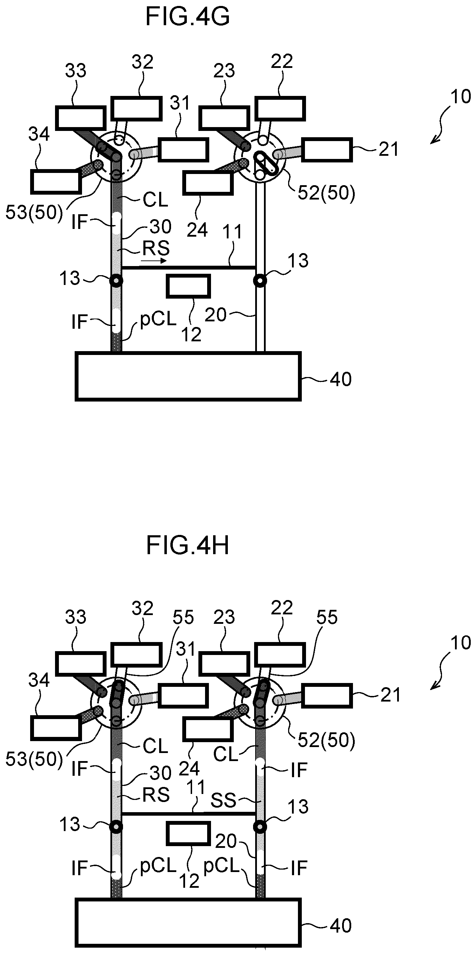

Next, as illustrated in Fig. 4F, the second switch 53 switches the supply sources to connect the cleaning liquid supply source 33 to the second flow path 30, and the cleaning liquid CL is supplied to the second flow path 30 by aspiration by the pump 40. As illustrated in Fig. 4G, the running solution RS is introduced into the capillary flow path 11 from the downstream side by a capillary phenomenon, pressurizing, aspirating, or the like. In a case in which the capillary phenomenon is used, it is necessary to open both ends of the capillary flow path 11 to the atmospheric pressure. On the other hand, in a case in which the running solution RS is introduced into the capillary flow path 11 by applying negative pressure or positive pressure, it is necessary to generate a pressure difference between the flow paths at both ends of the capillary.

From this state, the first switch 52 connects the pre-cleaning liquid supply source 24 to the first flow path 20, and the pre-cleaning liquid pCL is supplied to the first flow path 20 by aspiration by the pump 40. Subsequently, the first switch 52 switches the supply sources to connect the first auxiliary supply source 22 to the first flow path 20, and insulating fluid IF is supplied to the first flow path 20 by aspiration by the pump 40. Next, switching the supply sources, the first switch 52 connects the first supply source 21 to the first flow path 20, and the sample solution SS is supplied to the first flow path 20 by aspiration by the pump 40. Subsequently, the first switch 52 switches the supply sources to connect the first auxiliary supply source 22 to the first flow path 20, and insulating fluid IF is supplied to the first flow path 20 by aspiration by the pump 40. Then, the first switch 52 switches the supply sources to connect the cleaning liquid supply source 23 to the first flow path 20, and the cleaning liquid CL is supplied to the first flow path 20 by aspiration by the pump 40.

In this state, as illustrated in Fig. 4H, the first switch 52 connects the first flow path 20 to the first auxiliary supply source 22, so that the supply side of the first flow path 20 becomes an open path 55 opened to the atmospheric pressure. Similarly, as illustrated in Fig. 4H, the second switch 53 connects the second flow path 30 to the second auxiliary supply source 32, so that the supply side of the second flow path 30 also becomes an open path 55 opened to the atmospheric pressure. In this way, the supply side of the first flow path 20 and the supply side of the second flow path 30 become the open paths 55 and are opened to the atmospheric pressure, so that the external force due to the differential pressure with the outside air pressure does not act on the fluid in the capillary flow path 11. That is, in the electrophoresis unit 10 of the present embodiment, the switch 50 is capable of switching each of the first flow path 20 and the second flow path 30 to the open path 55 to be opened to the atmospheric pressure.

In the state illustrated in Fig. 4H, a voltage is applied between the electrodes 13 at both ends of the capillary flow path 11, whereby an electroosmotic flow is generated, so that the sample solution SS moves toward the downstream side in the capillary flow path 11. The components separated by electrophoresis are optically detected by the detector 12. At this time, since the electrodes 13 provided in the first flow path 20 and the second flow path 30 are interposed between the insulating fluid IF on both the supply side and the discharge side, electric leakage from the electrodes 13 to the supply side and the discharge side of the electrophoresis unit 10 can be prevented.

Then, after the electrophoresis is completed, aspiration in the first flow path 20 and the second flow path 30 by the pump 40 can cause the first flow path 20, the second flow path 30, and the capillary flow path 11 to be cleaned with the cleaning liquid CL.

The present embodiment described above implements an electrophoresis method that uses the capillary flow path 11 through which the sample solution SS moves from the upstream side to the downstream side, the detector 12 provided at the intermediate part of the capillary flow path 11, the first flow path 20, the intermediate part of which communicates with the upstream side of the capillary flow path 11, the first flow path 20 extending in the direction intersecting the longitudinal direction of the capillary flow path 11, and the second flow path 30, the intermediate part of which communicates with the downstream side of the capillary flow path 11, the second flow path 30 extending in the direction intersecting the longitudinal direction of the capillary flow path 11, the electrophoresis method including: introducing the running solution RS into the second flow path 30; introducing the running solution RS from the second flow path 30 into the capillary flow path 11; introducing the sample solution SS into the first flow path 20; introducing insulating fluid IF into the second flow path 30 so as to interpose the running solution RS at the position in communication with the capillary flow path 11 in the insulating fluid IF; introducing insulating fluid IF into the first flow path 20 so as to interpose the sample solution SS at the position in communication with the capillary flow path 11 in the insulating fluid IF; and applying the voltage between the upstream side and the downstream side of the capillary flow path 11.

In the electrophoresis method described above, it is preferable to further include: introducing insulating fluid IF into the second flow path 30 after introducing the running solution RS into the second flow path 30, and with respect to the insulating fluid IF, further introducing insulating fluid IF into the second flow path 30 so as to interpose the position in communication with the capillary flow path 11 in the insulating fluid IF; and introducing insulating fluid IF into the first flow path 20 after introducing the sample solution SS into the first flow path 20, and with respect to the insulating fluid IF, further introducing insulating fluid IF into the first flow path 20 so as to interpose the position in communication with the capillary flow path 11 in the insulating fluid IF.

In the electrophoresis method described above, it is preferable to further include: introducing the cleaning liquid CL into the second flow path 30 after introducing the running solution RS into the second flow path 30; and introducing the cleaning liquid CL into the first flow path 20 after introducing the sample solution SS into the first flow path 20.

In the electrophoresis method described above, it is preferable to further include: introducing the pre-cleaning liquid pCL into the second flow path 30 before introducing the running solution RS into the second flow path 30; and introducing the pre-cleaning liquid pCL into the first flow path 20 before introducing the sample solution SS into the first flow path 20.

Note that, although, in the present embodiment, the pump 40 is provided as a liquid discharge unit at the discharge side of the first flow path 20 and the second flow path 30, the pump 40 may be provided as part of the composition of the switch 50 at the supply side. The first auxiliary supply source 22 and the second auxiliary supply source 32 may be integrated into a single structure to be shared by the first flow path 20 and the second flow path 30. The two cleaning liquid supply sources 23, 33 may be integrated into a single structure to be shared by the first flow path 20 and the second flow path 30. The two pre-cleaning liquid supply sources 24, 34 may be integrated into a single structure to be shared by the first flow path 20 and the second flow path 30.

### Industrial Applicability

The technique of the present invention can be utilized for an electrophoresis unit and an electrophoresis method that perform capillary electrophoresis.

## Claims

1. An electrophoresis unit (10), comprising:
a capillary flow path (11) through which a sample solution (SS) moves from an upstream side to a downstream side in a state in which the capillary flow path (11) is filled with a running solution (RS);
a pair of electrodes (13) installed near both ends of the capillary flow path (11);
a detector (12) provided at an intermediate part of the capillary flow path (11);
a first flow path (20), an intermediate part of which communicates with the upstream side of the capillary flow path (11), the first flow path (20) extending in a direction intersecting a longitudinal direction of the capillary flow path (11);
a second flow path (30), an intermediate part of which communicates with the downstream side of the capillary flow path (11), the second flow path (30) extending in the direction intersecting the longitudinal direction;
a first supply source (21) configured to supply the sample solution (SS) to the first flow path (20);
a second supply source (31) configured to supply the running solution (RS) to the second flow path (30);
a pump (40) configured to move the running solution (RS) from the second supply source (31) to the second flow path (30) and to move the sample solution (SS) from the first supply source (21) to the first flow path (20);
a first auxiliary supply source (22) configured to supply, to the first flow path (20), insulating fluid (IF) that insulates the sample solution (SS) in contact with the electrode (13) in the first flow path (20);
a second auxiliary supply source (32) configured to supply, to the second flow path (30), insulating fluid (IF) that insulates the running solution (RS) in contact with the electrode (13) in the second flow path (30); and
a switch (50; 52, 53) configured to switch between supply and stop of fluid at least from the first supply source (21) and the second supply source (31) to the first flow path (20) and the second flow path (30).

2. The electrophoresis unit (10) according to claim 1, wherein the first auxiliary supply source (22) and the second auxiliary supply source (32) introduce the insulating fluid (IF) into the first flow path (20) and the second flow path (30), via the switch (50; 52, 53), respectively.

3. The electrophoresis unit (10) according to claim 1 or 2, wherein a fluid detection sensor (80) configured to detect arrival of fluid is attached to each of the first flow path (20) and the second flow path (30).

4. The electrophoresis unit (10) according to claim 1 or claim 2, wherein:
a first valve (22a) configured to open the first flow path (20) to atmospheric pressure is provided as the first auxiliary supply source (22), and
a second valve (32a) configured to open the second flow path (30) to atmospheric pressure is provided as the second auxiliary supply source (32).

5. The electrophoresis unit (10) according to claim 1 or 2, wherein the switch (52, 53) is capable of switching each of the first flow path (20) and the second flow path (30) to an open path to be opened to atmospheric pressure.

6. The electrophoresis unit (10) according to any one of claims 1 to 5, wherein:
a cleaning liquid (CL) is introduced into the first flow path (20), via the switch (52), after the sample solution (SS) is introduced into the first flow path (20), and
the cleaning liquid (CL) is introduced into the second flow path (30), via the switch (53), after the running solution (RS) is introduced into the second flow path (30).

7. The electrophoresis unit (10) according to claim 6, wherein:
a pre-cleaning liquid (pCL) is introduced into the first flow path (20), via the switch (52), before the sample solution (SS) is introduced into the first flow path (20), and
the pre-cleaning liquid (pCL) is introduced into the second flow path (30), via the switch (53), before the running solution (RS) is introduced into the second flow path (30).

8. An electrophoresis method that uses:
a capillary flow path (11) through which a sample solution (SS) moves from an upstream side to a downstream side in a state in which the capillary flow path (11) is filled with a running solution (RS),
a detector (12) provided at an intermediate part of the capillary flow path (11),
a first flow path (20), an intermediate part of which communicates with the upstream side of the capillary flow path (11), the first flow path (20) extending in a direction intersecting a longitudinal direction of the capillary flow path (11), and
a second flow path (30), an intermediate part of which communicates with the downstream side of the capillary flow path (11), the second flow path (30) extending in the direction intersecting the longitudinal direction,
the electrophoresis method comprising:
introducing the running solution (RS) into the second flow path (30);
introducing the running solution (RS) from the second flow path (30) into the capillary flow path (11);
introducing the sample solution (SS) into the first flow path (20);
introducing insulating fluid (IF) into the second flow path (30) so as to interpose the running solution (RS), at a position in communication with the capillary flow path (11), in the insulating fluid (IF);
introducing insulating fluid (IF) into the first flow path (20) so as to interpose the sample solution (SS), at a position in communication with the capillary flow path (11), in the insulating fluid (IF); and
applying a voltage between the upstream side and the downstream side of the capillary flow path (11).

9. The electrophoresis method according to claim 8, further comprising:
introducing the insulating fluid (IF) into the second flow path (30) before and after introducing the running solution (RS) into the second flow path (30); and
introducing the insulating fluid (IF) into the first flow path (20) before and after introducing the sample solution (SS) into the first flow path (20).

10. The electrophoresis method according to claim 8, further comprising:
introducing the running solution (RS) into the second flow path (30) and then introducing the insulating fluid (IF) so as to interpose the position in communication with the capillary flow path (11) in the insulating fluid (IF); and
introducing the sample solution (SS) into the first flow path (20) and then introducing the insulating fluid (IF) so as to interpose the position in communication with the capillary flow path (11) in the insulating fluid (IF).

11. The electrophoresis method according to claim 8, further comprising:
introducing the insulating fluid (IF) into the second flow path (30) after introducing the running solution (RS) into the second flow path (30), and with respect to the insulating fluid (IF), further introducing the insulating fluid (IF) into the second flow path (30) so as to interpose the position in communication with the capillary flow path (11) in the insulating fluid (IF); and
introducing the insulating fluid (IF) into the first flow path (20) after introducing the sample solution (SS) into the first flow path (20), and with respect to the insulating fluid (IF), further introducing the insulating fluid (IF) into the first flow path (20) so as to interpose the position in communication with the capillary flow path (11) in the insulating fluid (IF).

12. The electrophoresis method according to any one of claims 8 to 11, further comprising:
introducing a cleaning liquid (CL) into the second flow path (30) after introducing the running solution (RS) into the second flow path (30); and
introducing the cleaning liquid (CL) into the first flow path (20) after introducing the sample solution (SS) into the first flow path (20).

13. The electrophoresis method according to claim 12, further comprising:
introducing a pre-cleaning liquid (pCL) into the second flow path (30) before introducing the running solution (RS) into the second flow path (30); and
introducing the pre-cleaning liquid (pCL) into the first flow path (20) before introducing the sample solution (SS) into the first flow path (20).

## Patentansprüche

1. Elektrophoreseeinheit (10), umfassend:
einen Kapillarströmungsweg (11), durch den sich eine Probenlösung (SS) von einer stromaufwärtigen Seite zu einer stromabwärtigen Seite in einem Zustand bewegt, in dem der Kapillarströmungsweg (11) mit einer fließenden Lösung (RS) gefüllt ist;
ein Elektrodenpaar (13), das in der Nähe von beiden Enden des Kapillarströmungswegs (11) eingebaut ist;
einen Detektor (12), der an einem Zwischenteil des Kapillarströmungswegs (11) bereitgestellt ist;
einen ersten Strömungsweg (20), von dem ein Zwischenteil mit der stromaufwärtigen Seite des Kapillarströmungswegs (11) kommuniziert, wobei sich der erste Strömungsweg (20) in einer Richtung erstreckt, die eine Längsrichtung des Kapillarströmungswegs (11) schneidet;
einen zweiten Strömungsweg (30), von dem ein Zwischenteil mit der stromabwärtigen Seite des Kapillarströmungswegs (11) kommuniziert, wobei sich der zweite Strömungsweg (30) in der Richtung erstreckt, die die Längsrichtung schneidet;
eine erste Zufuhrquelle (21), die ausgebildet ist, um dem ersten Strömungsweg (20) die Probenlösung (SS) zuzuführen;
eine zweite Zufuhrquelle (31), die ausgebildet ist, um dem zweiten Strömungsweg (30) die fließende Lösung (RS) zuzuführen;
eine Pumpe (40), die ausgebildet ist, um die fließende Lösung (RS) von der zweiten Zufuhrquelle (31) zum zweiten Strömungsweg (30) zu bewegen und die Probenlösung (SS) von der ersten Zufuhrquelle (21) zum ersten Strömungsweg (20) zu bewegen;
eine erste Hilfszufuhrquelle (22), die ausgebildet ist, um dem ersten Strömungsweg (20) isolierende Flüssigkeit (IF) zuzuführen, die die Probenlösung (SS) im Kontakt mit der Elektrode (13) im ersten Strömungsweg (20) isoliert;
eine zweite Hilfszufuhrquelle (32), die ausgebildet ist, um dem zweiten Strömungsweg (30) isolierende Flüssigkeit (IF) zuzuführen, die die fließende Lösung (RS) im Kontakt mit der Elektrode (13) im zweiten Strömungsweg (30) isoliert; und
einen Schalter (50; 52, 53), der ausgebildet ist, um zwischen Zuführen und Stoppen von Fluid mindestens von der ersten Zufuhrquelle (21) und der zweiten Zufuhrquelle (31) zum ersten Strömungsweg (20) und dem zweiten Strömungsweg (30) umzuschalten.

2. Elektrophoreseeinheit (10) nach Anspruch 1, wobei die erste Hilfszufuhrquelle (22) und die zweite Hilfszufuhrquelle (32) die isolierende Flüssigkeit (IF) über den Schalter (50; 52, 53) in den ersten Strömungsweg (20) bzw. den zweiten Strömungsweg (30) einleitet.

3. Elektrophoreseeinheit (10) nach Anspruch 1 oder 2, wobei ein Fluiderfassungssensor (80), der ausgebildet ist, um das Eintreffen von Fluid zu erfassen, an jedem von dem ersten Strömungsweg (20) und dem zweiten Strömungsweg (30) befestigt ist.

4. Elektrophoreseeinheit (10) nach Anspruch 1 oder Anspruch 2, wobei:
ein erstes Ventil (22a), das ausgebildet ist, um den ersten Strömungsweg (20) für Luftdruck zu öffnen, als die erste Hilfszufuhrquelle (22) bereitgestellt ist, und
ein zweites Ventil (32a), das ausgebildet ist, um den zweiten Strömungsweg (30) für Luftdruck zu öffnen, als die zweite Hilfszufuhrquelle (32) bereitgestellt ist.

5. Elektrophoreseeinheit (10) nach Anspruch 1 oder 2, wobei der Schalter (52, 53) imstande ist, jeden von dem ersten Strömungsweg (20) und dem zweiten Strömungsweg (30) in einen offenen Weg umzuschalten, der für Luftdruck geöffnet sein soll.

6. Elektrophoreseeinheit (10) nach einem der Ansprüche 1 bis 5, wobei:
eine Reinigungsflüssigkeit (CL) über den Schalter (52) in den ersten Strömungsweg (20) eingeleitet wird, nachdem die Probenlösung (SS) in den ersten Strömungsweg (20) eingeleitet wurde, und
die Reinigungsflüssigkeit (CL) über den Schalter (53) in den zweiten Strömungsweg (30) eingeleitet wird, nachdem die fließende Lösung (RS) in den zweiten Strömungsweg (30) eingeleitet wurde.

7. Elektrophoreseeinheit (10) nach Anspruch 6, wobei
eine Vorreinigungsflüssigkeit (pCL) über den Schalter (52) in den ersten Strömungsweg (20) eingeleitet wird, bevor die Probenlösung (SS) in den ersten Strömungsweg (20) eingeleitet wird, und
die Vorreinigungsflüssigkeit (pCL) über den Schalter (53) in den zweiten Strömungsweg (30) eingeleitet wird, bevor die fließende Lösung (RS) in den zweiten Strömungsweg (30) eingeleitet wird.

8. Elektrophoreseverfahren, das Folgendes verwendet:
einen Kapillarströmungsweg (11), durch den sich eine Probenlösung (SS) von einer stromaufwärtigen Seite zu einer stromabwärtigen Seite in einem Zustand bewegt, in dem der Kapillarströmungsweg (11) mit einer fließenden Lösung (RS) gefüllt ist,
einen Detektor (12), der an einem Zwischenteil des Kapillarströmungswegs (11) bereitgestellt ist,
einen ersten Strömungsweg (20), von dem ein Zwischenteil mit der stromaufwärtigen Seite des Kapillarströmungswegs (11) kommuniziert, wobei sich der erste Strömungsweg (20) in einer Richtung erstreckt, die eine Längsrichtung des Kapillarströmungswegs (11) schneidet, und
einen zweiten Strömungsweg (30), von dem ein Zwischenteil mit der stromabwärtigen Seite des Kapillarströmungswegs (11) kommuniziert, wobei sich der zweite Strömungsweg (30) in der Richtung erstreckt, die die Längsrichtung schneidet, wobei das Elektrophoreseverfahren Folgendes umfasst:
Einleiten der fließenden Lösung (RS) in den zweiten Strömungsweg (30);
Einleiten der fließenden Lösung (RS) von dem zweiten Strömungsweg (30) in den Kapillarströmungsweg (11);
Einleiten der Probenlösung (SS) in den ersten Strömungsweg (20);
Einleiten von isolierender Flüssigkeit (IF) in den zweiten Strömungsweg (30), um die fließende Lösung (RS) an einer Stelle in Kommunikation mit dem Kapillarströmungsweg (11) in der isolierenden Flüssigkeit (IF) einzufügen;
Einleiten von isolierender Flüssigkeit (IF) in den ersten Strömungsweg (20), um die Probenlösung (SS) an einer Stelle in Kommunikation mit dem Kapillarströmungsweg (11) in der isolierenden Flüssigkeit (IF) einzufügen; und
Anlegen einer Spannung zwischen der stromaufwärtigen Seite und der stromabwärtigen Seite des Kapillarströmungswegs (11).

9. Elektrophoreseverfahren nach Anspruch 8, weiter umfassend:
Einleiten der isolierenden Flüssigkeit (IF) in den zweiten Strömungsweg (30) vor und nach Einleiten der fließenden Lösung (RS) in den zweiten Strömungsweg (30); und
Einleiten der isolierenden Flüssigkeit (IF) in den ersten Strömungsweg (20) vor und nach Einleiten der Probenlösung (SS) in den ersten Strömungsweg (20).

10. Elektrophoreseverfahren nach Anspruch 8, weiter umfassend:
Einleiten der fließenden Lösung (RS) in den zweiten Strömungsweg (30) und dann Einleiten der isolierenden Flüssigkeit (IF), um die Stelle in Kommunikation mit dem Kapillarströmungsweg (11) in der isolierenden Flüssigkeit (IF) einzufügen; und
Einleiten der Probenlösung (SS) in den ersten Strömungsweg (20) und dann Einleiten der isolierenden Flüssigkeit (IF), um die Stelle in Kommunikation mit dem Kapillarströmungsweg (11) in der isolierenden Flüssigkeit (IF) einzufügen.

11. Elektrophoreseverfahren nach Anspruch 8, weiter umfassend:
Einleiten der isolierenden Flüssigkeit (IF) in den zweiten Strömungsweg (30) nach Einleiten der fließenden Lösung (RS) in den zweiten Strömungsweg (30), und in Bezug auf die isolierende Flüssigkeit (IF), weiteres Einleiten der isolierenden Flüssigkeit (IF) in den zweiten Strömungsweg (30), um die Stelle in Kommunikation mit dem Kapillarströmungsweg (11) in der isolierenden Flüssigkeit (IF) einzufügen; und
Einleiten der isolierenden Flüssigkeit (IF) in den ersten Strömungsweg (20) nach Einleiten der Probenlösung (SS) in den ersten Strömungsweg (20), und in Bezug auf die isolierende Flüssigkeit (IF), weiteres Einleiten der isolierenden Flüssigkeit (IF) in den ersten Strömungsweg (20), um die Stelle in Kommunikation mit dem Kapillarströmungsweg (11) in der isolierenden Flüssigkeit (IF) einzufügen.

12. Elektrophoreseverfahren nach einem der Ansprüche 8 bis 11, weiter umfassend:
Einleiten einer Reinigungsflüssigkeit (CL) in den zweiten Strömungsweg (30) nach Einleiten der fließenden Lösung (RS) in den zweiten Strömungsweg (30); und
Einleiten der Reinigungsflüssigkeit (CL) in den ersten Strömungsweg (20) nach Einleiten der Probenlösung (SS) in den ersten Strömungsweg (20).

13. Elektrophoreseverfahren nach Anspruch 12, weiter umfassend:
Einleiten einer Vorreinigungsflüssigkeit (pCL) in den zweiten Strömungsweg (30) vor Einleiten der fließenden Lösung (RS) in den zweiten Strömungsweg (30); und
Einleiten der Vorreinigungsflüssigkeit (pCL) in den ersten Strömungsweg (20) vor Einleiten der Probenlösung (SS) in den ersten Strömungsweg (20).

## Revendications

1. Unité d'électrophorèse (10), comprenant :
un canal d'écoulement capillaire (11) à travers lequel une solution échantillon (SS) circule d'un côté amont à un côté aval dans un état dans lequel le canal d'écoulement capillaire (11) est rempli d'une solution en circulation continue (RS) ;
une paire d'électrodes (13) installée près des deux extrémités du canal d'écoulement capillaire (11) ;
un détecteur (12) disposé au niveau d'une partie intermédiaire du canal d'écoulement capillaire (11) ;
un premier canal d'écoulement (20), dont une partie intermédiaire communique avec le côté amont du canal d'écoulement capillaire (11), le premier canal d'écoulement (20) s'étendant dans une direction coupant une direction longitudinale du canal d'écoulement capillaire (11) ;
un second canal d'écoulement (30), dont une partie intermédiaire communique avec le côté aval du canal d'écoulement capillaire (11), le second canal d'écoulement (30) s'étendant dans la direction coupant la direction longitudinale ;
une première source d'alimentation (21) configurée pour alimenter en solution échantillon (SS) le premier canal d'écoulement (20) ;
une seconde source d'alimentation (31) configurée pour alimenter en solution en circulation continue (RS) le second canal d'écoulement (30) ;
une pompe (40) configurée pour faire circuler la solution en circulation continue (RS) de la seconde source d'alimentation (31) au second canal d'écoulement (30) et pour faire circuler la solution échantillon (SS) de la première source d'alimentation (21) au premier canal d'écoulement (20) ;
une première source d'alimentation auxiliaire (22) configurée pour alimenter le premier canal d'écoulement (20) en fluide isolant (IF), qui isole la solution échantillon (SS) en contact avec l'électrode (13) dans le premier canal d'écoulement (20) ;
une seconde source d'alimentation auxiliaire (32) configurée pour alimenter le second canal d'écoulement (30) en fluide isolant (IF), qui isole la solution en circulation continue (RS) en contact avec l'électrode (13) dans le second canal d'écoulement (30) ; et
un commutateur (50 ; 52, 53) configuré pour commuter entre la fourniture et l'arrêt de fluide au moins de la première source d'alimentation (21) et de la seconde source d'alimentation (31) au premier canal d'écoulement (20) et au second canal d'écoulement (30).

2. Unité d'électrophorèse (10) selon la revendication 1, dans laquelle la première source d'alimentation auxiliaire (22) et la seconde source d'alimentation auxiliaire (32) introduisent respectivement le fluide isolant (IF) dans le premier canal d'écoulement (20) et le second canal d'écoulement (30), par l'intermédiaire du commutateur (50 ; 52, 53).

3. Unité d'électrophorèse (10) selon la revendication 1 ou la revendication 2, dans laquelle un capteur de détection de fluide (80) configuré pour détecter l'arrivée de fluide est fixé à chacun du premier canal d'écoulement (20) et du second canal d'écoulement (30).

4. Unité d'électrophorèse (10) selon la revendication 1 ou la revendication 2, dans laquelle :
une première vanne (22a) configurée pour ouvrir le premier canal d'écoulement (20) à la pression atmosphérique fait office de première source d'alimentation auxiliaire (22), et
une seconde vanne (32a) configurée pour ouvrir le second canal d'écoulement (30) à la pression atmosphérique fait office de seconde source d'alimentation auxiliaire (32).

5. Unité d'électrophorèse (10) selon la revendication 1 ou la revendication 2, dans laquelle le commutateur (52, 53) est apte à commuter chacun du premier canal d'écoulement (20) et du second canal d'écoulement (30) vers un trajet ouvert à ouvrir à la pression atmosphérique.

6. Unité d'électrophorèse (10) selon l'une quelconque des revendications 1 à 5, dans laquelle :
un liquide de nettoyage (CL) est introduit dans le premier canal d'écoulement (20), par l'intermédiaire du commutateur (52), après que la solution échantillon (SS) est introduite dans le premier canal d'écoulement (20), et
le liquide de nettoyage (CL) est introduit dans le second canal d'écoulement (30), par l'intermédiaire du commutateur (53), après que la solution en circulation continue (RS) est introduite dans le second canal d'écoulement (30).

7. Unité d'électrophorèse (10) selon la revendication 6, dans laquelle :
un liquide de pré-nettoyage (pCL) est introduit dans le premier canal d'écoulement (20), par l'intermédiaire du commutateur (52), avant que la solution échantillon (SS) ne soit introduite dans le premier canal d'écoulement (20), et
le liquide de pré-nettoyage (pCL) est introduit dans le second canal d'écoulement (30), par l'intermédiaire du commutateur (53), avant que la solution en circulation continue (RS) ne soit introduite dans le second canal d'écoulement (30).

8. Procédé d'électrophorèse mettant en œuvre :
un canal d'écoulement capillaire (11) à travers lequel une solution échantillon (SS) circule d'un côté amont à un côté aval dans un état dans lequel le canal d'écoulement capillaire (11) est rempli d'une solution en circulation continue (RS),
un détecteur (12) disposé au niveau d'une partie intermédiaire du canal d'écoulement capillaire (11),
un premier canal d'écoulement (20), dont une partie intermédiaire communique avec le côté amont du canal d'écoulement capillaire (11), le premier canal d'écoulement (20) s'étendant dans une direction coupant une direction longitudinale du canal d'écoulement capillaire (11), et
un second canal d'écoulement (30), dont une partie intermédiaire communique avec le côté aval du canal d'écoulement capillaire (11), le second canal d'écoulement (30) s'étendant dans la direction coupant la direction longitudinale,
le procédé d'électrophorèse comprenant :
l'introduction de la solution en circulation continue (RS) dans le second canal d'écoulement (30) ;
l'introduction de la solution en circulation continue (RS) depuis le second canal d'écoulement (30) dans le canal d'écoulement capillaire (11) ;
l'introduction de la solution échantillon (SS) dans le premier canal d'écoulement (20) ;
l'introduction du fluide isolant (IF) dans le second canal d'écoulement (30) de manière à intercaler la solution en circulation continue (RS), en une position en communication avec le canal d'écoulement capillaire (11), dans le fluide isolant (IF) ;
l'introduction du fluide isolant (IF) dans le premier canal d'écoulement (20) de manière à intercaler la solution échantillon (SS), en une position en communication avec le canal d'écoulement capillaire (11), dans le fluide isolant (IF) ; et
l'application d'une tension entre le côté amont et le côté aval du canal d'écoulement capillaire (11).

9. Procédé d'électrophorèse selon la revendication 8, comprenant en outre :
l'introduction du fluide isolant (IF) dans le second canal d'écoulement (30) avant et après introduction de la solution en circulation continue (RS) dans le second canal d'écoulement (30) ; et
l'introduction du fluide isolant (IF) dans le premier canal d'écoulement (20) avant et après introduction de la solution échantillon (SS) dans le premier canal d'écoulement (20).

10. Procédé d'électrophorèse selon la revendication 8, comprenant en outre :
l'introduction de la solution en circulation continue (RS) dans le second canal d'écoulement (30), puis l'introduction du fluide isolant (IF) de manière à intercaler la position en communication avec le canal d'écoulement capillaire (11) dans le fluide isolant (IF) ; et
l'introduction de la solution échantillon (SS) dans le premier canal d'écoulement (20), puis l'introduction du fluide isolant (IF) de manière à intercaler la position en communication avec le canal d'écoulement capillaire (11) dans le fluide isolant (IF).

11. Procédé d'électrophorèse selon la revendication 8, comprenant en outre :
l'introduction du fluide isolant (IF) dans le second canal d'écoulement (30) après introduction de la solution en circulation continue (RS) dans le second canal d'écoulement (30), et par rapport au fluide isolant (IF), l'introduction en outre du fluide isolant (IF) dans le second canal d'écoulement (30) de manière à intercaler la position en communication avec le canal d'écoulement capillaire (11) dans le fluide isolant (IF) ; et
l'introduction du fluide isolant (IF) dans le premier canal d'écoulement (20) après introduction de la solution échantillon (SS) dans le premier canal d'écoulement (20), et par rapport au fluide isolant (IF), l'introduction en outre du fluide isolant (IF) dans le premier canal d'écoulement (20) de manière à intercaler la position en communication avec le canal d'écoulement capillaire (11) dans le fluide isolant (IF).

12. Procédé d'électrophorèse selon l'une quelconque des revendications 8 à 11, comprenant en outre :
l'introduction d'un liquide de nettoyage (CL) dans le second canal d'écoulement (30) après introduction de la solution en circulation continue (RS) dans le second canal d'écoulement (30) ; et
l'introduction du liquide de nettoyage (CL) dans le premier canal d'écoulement (20) après introduction de la solution échantillon (SS) dans le premier canal d'écoulement (20).

13. Procédé d'électrophorèse selon la revendication 12, comprenant en outre :
l'introduction d'un liquide de pré-nettoyage (pCL) dans le second canal d'écoulement (30) avant d'introduire la solution en circulation continue (RS) dans le second canal d'écoulement (30) ; et
l'introduction du liquide de pré-nettoyage (pCL) dans le premier canal d'écoulement (20) avant d'introduire la solution échantillon (SS) dans le premier canal d'écoulement (20).
